# EUROPÄISCHE PATENTSCHRIFT

(11) **EP 0 482 314 B1**
(45) Veröffentlichungstag und Bekanntmachung des Hinweises auf die Patenterteilung: **07.08.1996**
(21) Anmeldenummer: 91114326.1
(22) Anmeldetag: 27.08.1991
(51) Int. Cl.: B09B 1/00, B09B 3/00

(54) **Verfahren zum schadlosen Deponieren von verfestigten anorganischen Reststoffen und Abfällen in aufgelassenen Steinbrüchen**
Method for the harmless dumping of solidified inorganic residues and wastes in abandoned quarries
Procédé pour le dépôt sans nuisance de résidus et déchets inorganiques solifiés dans des carrières abandonnées

(30) Priorität: 26.09.1990 DE 4030349
(43) Veröffentlichungstag der Anmeldung: 29.04.1992
(73) Patentinhaber: Rheinische Kalksteinwerke GmbH, 42489 Wülfrath (DE)
(72) Erfinder: Roeder, Alfred, Dr. rer.nat. Dipl.-Phys., W-4100 Duisburg (DE); Hennecke, Hans Peter, Dr.-Ing. Dipl.-Ing., W-5620 Velbert (DE); Schäfer, Reinhold, Dipl.-Ing, W-5603 Wülfrath (DE); Stroh, Dieter, Dr.-Ing., W-4300 Essen 16 (DE); Wenzel, Friedrich-Wilhelm, Dipl.-Ing., W-4300 Essen 1 (DE)
(74) Vertreter: Cohausz & Florack Patentanwälte

(56) Entgegenhaltungen:
- EP-A- 0 296 575
- EP-A- 0 343 154
- WO-A-89/01547
- DE-A- 3 641 786
- DE-A- 3 725 749
- DE-A- 3 911 589
- FR-A- 2 471 265
- MUELL UND ABFALL. Bd. 20, Nr. 7, Juli 1988, BERLIN DE Seiten 281 - 295; DRESCHER: 'DEPONIEDICHTUNGEN FÜR SONDERABFALLDEPONIEN - ARBEITSPAPIER -'

## Beschreibung

Die Erfindung betrifft ein Verfahren zum schadlosen Deponieren von verfestigten Reststoffen und Abfällen, z. B. Rückständen aus Rauchgasreinigungsanlagen, oder ausgelaugten Schlacken aus metallurgischen Prozessen in aufgelassenen Steinbrüchen.

Die Nutzung aufgelassener Steinbrüche als Deponieräume für z. B. Rückstände aus Rauchgasreinigungsanlagen bietet sich grundsätzlich an, jedoch sind nicht nur umfangreiche geotechnische und hydrogeologische Untersuchungen erforderlich sondern auch meist aufwendige bautechnische Maßnahmen, um den behördlichen Vorschriften zum Schutz der Umwelt, insbesondere zur Reinhaltung des Grundwassers, zu genügen.

Bei Einhaltung des vorgeschriebenen Abstandes der Deponieaufstandsfläche (Deponieplanum) vom Grundwasserpegel, die z. B. für Deponien der Klasse 4 mindestens 1 m beträgt, bietet die Ausgestaltung der viellagigen Basisabdichtung im allgemeinen keine besonderen technischen Probleme.
Die auf dem Deponieplanum aufzubauende Basisabdichtung, ist für die Deponieklasse 4 von oben nach unten wie folgt geschichtet:
- Vlies zur Gewährleistung der Dränwirkung des Flächenfilters;
- Flächenfilter d = 30 cm;
- Hochdruck-Polyethylen-Vlies zum Schutz der Folie;
- eine Lage HDPE-Folie, d = 2,5 mm;
- 1,5 m mineralische Abdichtung 6-lagig einzubauen, Durchlässigkeit k ≦ 10⁻¹⁰ m/s und, wenn der natürliche Untergrund (Steinbruchsohle) nicht ausreichend gering durchlässig ist,
- 3 m mineralische Dichtung mit einer Durchlässigkeit K_{f}≦1x10⁻⁷ m/s

Um die Möglichkeit zu schaffen, das sich auf der Basisabdichtung ansammelnde Sickerwasser absaugen zu können, kann die Basis der Deponie in Felder eingeteilt und mit einem dachprofilartigen Quergefälle von z. B. 3 % und einem Längsgefälle von z. B. 1 % zu einem Tiefstpunkt hin, der sich in der Mitte des Feldes befindet, versehen werden. Über diesen Tiefpunkten werden Schächte angeordnet, um das Wasser, das sich auf der Basis sammelt, abpumpen zu können.

Derzeit muß davon ausgegangen werden, daß nur solche Steinbrüche für die Deponierung in Frage kommen, bei denen - gegebenenfalls nach Auffüllung des Untergrundes - der Abstand vom maximalen Wasserstand zum Deponieplanum mindestens 1 m beträgt.

Das Problem der Nutzung von ausgekolkten Steinbrüchen stellt die Abdichtung der Steinbruchwände dar. In der Literatur wird dies präzisiert:

"Die Abdichtung von Steinbruchwänden muß sowohl die drucklose Ableitung von Kluftwasser als auch von Sickerwasser gewährleisten. Darüber hinaus muß die Abdichtung die Setzung der Abfälle mitmachen, ohne daß sich unverträgliche Zugspannungen aufbauen."

Bis vor kurzem gab es für die Abdichtung der mehr oder weniger senkrechten Steinbruchwände keine brauchbaren Systeme. Ein in neuester Zeit vorgeschlagenes System besteht aus Beton-Fertigteilen, die in der Steinbruchwand als Tragsystem verankert sind, bei denen eine Noppenfolie als Abdichtung mit dem Beton fest verbunden ist. Die Beton-Fertigteile sind so gestaltet, daß sie den Neigungsverhältnissen der Vorsprünge etc. der Steinbruchwand sowohl im Grund- als auch im Aufriß relativ gut angepaßt werden können. Die Stöße zwischen den einzelnen Fertigplatten mit Noppenfolie erfolgt durch eine Überklebung mit einer Lasche aus Polyethylen, die beidseitig mit dem Basismaterial verschweißt wird. Dieses System, auf das beispielhaft für andere analoge Systeme verwiesen wird, hat zwar den Vorteil der nur geringen Nachbearbeitung der Steinbruchwände, aber den Nachteil der sehr hohen Verlegungskosten, und es bleibt die Unsicherheit über das Langzeitverhalten der Abdichtung bestehen.

Um eine höhere Sicherheit der Abdichtung zu gewährleisten, tendieren die Vorschläge daher in der jüngsten Zeit dahin, die Steinbruchböschung im oberen Teil abzuflachen, z. B. durch Sprengung und durch Verfüllung im Boden-/Wandbereich die Steinbruchböschung in ein Böschungsplanum einer vorgegebenen Neigung, z. B. 1 : 1,3, umzugestalten. Als Verfüllmaterial wird vorwiegend gut zu verdichtender Boden gewählt. In Teilbereichen der felsigen Böschung wird es zur Vermeidung unterschiedlicher Setzungen erforderlich sein, mit Magerbeton zu verfüllen. Auf diesem neu entstandenen Böschungsplanum wird dann die für z. B. Deponien der Klasse 4 erforderliche Basisabdichtung aufgebracht.

Die durch die behördlich vorgeschriebene Abdichtung ist damit nicht nur für den Boden, sondern dann auch für die Böschung erfüllt. Wegen der großen Böschungslänge und aus Gründen des Arbeitsablaufes werden in einem Vertikalabstand von ca. 15 m Bermen - umlaufende Fahrstraßen - angeordnet.
Der grundsätzliche Nachteil dieses Vorschlages ist der erhöhte Platzbedarf durch Aufweitung des Steinbruches, was oft wegen der Bebauung nicht möglich ist, und die zu erbringende investive Vorleistung durch Herrichten des Böschungsplanums vor Beginn der Deponierung.

Aus der FR-A- 2 471 265 ist ein Verfahren zur Endlagerung von Abfallstoffen bekannt, bei dem die Abfallstoffe mit einem Bindemittel gemischt und die erhaltene Mischung in gießfähigem Zustand in einen Deponieraum eingebracht wird, wo sie erstarrt. Als Bindemittel werden bituminöse Stoffe empfohlen oder organische Bindemittel, wie Polyurethan, Epoxid- oder Polyesterharz sowie Zement. Gefährliche Sonderabfälle werden in Fässern in den Deponieraum gebracht.

Der Erfindung liegt nun die Aufgabe zugrunde, Maßnahmen anzugeben, die es ermöglichen, verfestigte anorganische Reststoffe und Abfälle entsprechend den behördlichen Auflagen in voll abgedichteten Steinbrüchen kostengünstiger als bisher vorzunehmen.

Zur Lösung dieser Aufgabe wird erfindungsgemäß vorgeschlagen, beim schadlosen Deponieren von verfestigten anorganischen Reststoffen und Abfällen, nämlich Rückständen aus der Abgasreinigung wie
- Flugaschen und Stäube aus Feuerungs- und Verbrennungsanlagen,
- Aschen und Stäube aus Wirbelschichtfeuerungsanlagen,
- trockene mineralische Rückstände aus Rauchgasreinigungen,
- Flugaschen und Stäube aus Müllverbrennungsanlagen etc.

oder von ausgelaugten Schlacken aus metallurgischen Prozessen in aufgelassenen Steinbrüchen den Rückständen oder Mischungen aus Rückständen hydraulische Bindemittel, wie Portland-, Hochofen-, Alinitzement, in ausreichender Menge zuzugegeben und gut zu vermischen und der Mischung vor dem Deponieren das erforderliche Anmachwasser zuzugeben. Dabei soll sich der Zusatz an hydraulischen Bindemitteln und Anmachwassser danach richten, daß die aus den Rückständen, Bindemitteln und Anmachwasser hergestellte Betonmörtelmischung nach dem Erstarren Festigkeiten von gleich oder größer als 2,0 N/mm² (nach 7 Tagen) und Durchlässigkeitswerte von K_{f} kleiner/gleich 1 x 10⁻⁹ m/s erreichen. Aus dieser Mörtelmischung wird lagenweise auf der vorschriftsmäßig, z. B. entsprechend der Deponieklasse 4, abgedichteten Steinbruchsohle, wobei die Abdichtung als Wanne ausgebildet ist, der monolithische Deponiekörper mit steilen Flankenwänden hochgezogen. Bei Beibehaltung der Steinbruchböschung in ursprünglichem oder in einem für die Deponierung hergerichteten Zustand, wird der Restraum zwischen Deponiekörper und Böschung in einem geschichteten Aufbau mit unterschiedlichen Materialien verfüllt.

Nach Abschluß der Deponiearbeiten wird die Deponie mit einer Oberflächenabdichtung entsprechend den Forderungen der TA Abfall versehen, und schließlich ist die Deponie mit Einrichtungen zu versehen, um das sich evtl. oberhalb der Bodenabdichtung ansammelnde Sickerwasser abzupumpen.
Die Basisabdichtung wird entlang der äußeren Begrenzungslinie hochgezogen und bildet eine geschlossene Wanne. Die Höhe des Wannenrandes kann z. B. 3 m betragen. Die Seitenwand des Deponiekörpers wird steil eingestellt, um das Steinbruchvolumen gut zu nutzen; eine Böschungsneigung von z. B. 10 : 1 ist wegen des betonartigen Verhaltens des Deponiematerials gut einstellbar. Um zu verhindern, daß kontaminiertes Niederschlagwasser unkontrolliert aus dem Schüttfeld austritt, wird an der äußeren Begrenzung des Schüttfeldes ein umlaufender Deich von z. B. 3 m Breite und z. B. 2 m Höhe mit Hilfe von Stahlschalung hergestellt und laufend mit hochgezogen. Die Hinterfüllung zwischen äußerer Begrenzungswand des Deponiekörpers und der ggf. gesäuberten Steinbruchwand erfolgt sukzessive mit dem Hochsteigen des Deponiekörpers. Die Hinterfüllung ist geschichtet, und zwar wird an der Steinbruchwand eine ca. 1 m starke Hangdränage mit einer Schotterkörnung von z. B. 16 bis 32 mm hochgezogen und auf der Wand des Deponiekörpers eine mineralische Dichtung mit einer Durchlässigkeit K_{f} kleiner oder gleich 1 x 10⁻¹⁰ m/s in einer Stärke von ca. 3 m. Der Zwischenraum zwischen Hangdränage und mineralischer Dichtung wird mit gut verdichtetem inertem Material ausgefüllt.
Die Hangdränage mündet im Bereich der Steinbruchsohle in einem Versickerungsgraben. An der Außenwand des Deponiekörpers wird wegen der fast senkrechten Böschung und wegen der niedrigen Durchlässigkeit des Deponiegutes auf eine Kombinationsdichtung (mineralische Dichtung + Folie) verzichtet. Dafür wird die mineralische Dichtung mit ca. 3 m recht dick ausgeführt.

Nach Abschluß der Deponiearbeiten wird der Deponiebereich mit einer Oberflächenabdichtung entsprechend den behördlichen Vorschriften versehen, und zwar von oben nach unten:
- Bewuchs,
- Rekultivierungsschicht d mindestens 1 m,
- Flächenfilter (d = 30 cm),
- Kunststoff-Vlies zum Schutz der Folie,
- Kunststoffdichtungsbahn, d mindestens 2,5 mm,
- 0,50 m mineralische Dichtungsschicht, 2-lagig eingebaut, Durchlässigkeit K_{f} kleiner/gleich 1 x 10⁻¹⁰ m/s.

Das Oberflächenwasser kann gesammelt und gezielt abgeführt werden. Schließlich wird die Basis der Deponie zur kontrollierten Ableitung von Sickerwasser in Felder eingeteilt mit einem dachprofilartigen Quergefälle von ca. 3 % und einem Längsgefälle von ca. 1 %, zu einem Tiefstpunkt hin, der sich in der Mitte des Feldes befindet.
Hier werden Schächte angeordnet, um das sich auf der Basisabdeckung ansammelnde Wasser abpumpen zu können.
Alternativ kann, abhängig von den örtlichen Gegebenheiten, anstelle der senkrechten Schachtrohre unterhalb der Basisabdichtung ein Stollen angeordnet werden, durch den das Wasser im freien Gefälle einem Einzelschacht außerhalb der Deponie zufließt und von dort abgepumpt wird.

Dieses Verfahren zum Deponieren von verfestigten anorganischen Reststoffen und Abfällen, insbesondere solchen aus Rauchgasreinigungsanlagen, ermöglicht unter Wahrung der behördlichen Auflagen, die z. B. für die Deponieklasse 4 gelten, ohne irgendwelche Beschränkung auch die Deponierung in aufgelassenen Steinbrüchen bei vertretbaren Kosten. Die investiven Aufwendungen für die Berücksichtigung des Wandeinflusses müssen außerdem nicht komplett vor Beginn des Deponierens abgeschlossen sein, sondern können in etwa ratierlich mit der Nutzung des Deponievolumens des Steinbruchs aufgebracht werden. Damit entfällt die Notwendigkeit der unmittelbaren vollständigen Abdichtung der Steinbruchwand.

So belaufen sich bei der Durchrechnung für einen aufgelassenen Kalksteinbruch mit einem für die Deponierung zur Verfügung stehenden Nutzvolumen von 5,0 Mio. m³ die Summe aller Herrichtungskosten für Deponieplanum, Hinterfüllung, Oberflächenabdichtung etc. auf weniger als 16 DM/m³ (Preisbasis Anfang 1990). Demgegenüber liegen die Kosten für Ausführungsformen, die die Böschung einebnen und in ein Böschungsplanum überführen, bis zu 60 % höher.

## Patentansprüche

1. Verfahren zum schadlosen Deponieren von verfestigten anorganischen Reststoffen und Abfällen, insbesondere solchen aus Rauchgasreinigungsanlagen oder aus metallurgischen Prozessen, in aufgelassenen Steinbrüchen durch Vermischen der Rückstände oder Mischungen aus Rückständen mit einer ausreichenden Menge an hydraulischen Bindemitteln, wie Portland-, Hochofen-, Alinitzement, und durch Zugabe der erforderlichen Menge an Anmachwasser im Verlaufe erneuter Durchmischung, so daß eine erstarrungsfähige Betonmörtelmischung mit einer Festigkeit von gleich oder größer als 2 N/mm² (nach 7 Tagen) und einem Durchlässigkeitswert von K_{f} gleich oder kleiner als 10⁻⁹ m/s entsteht,
**dadurch gekennzeichnet,** daß die Betonmörtelmischung auf einer Basisabdichtung, die auf der Steinbruchsohle aufgebracht ist, zu einem monolithischen Deponiekörper mit steilen Flankenwänden lagenweise hochgezogen wird und daß der verbleibende freie Raum zwischen Deponiekörper und Steinbruchwand mit inerten Materialien verfüllt wird und daß nach Abschluß der Deponiearbeiten der Deponiekörper in üblicher Weise mit einer geeigneten Oberflächenabdichtung versehen wird.

2. Verfahren nach Anspruch 1,
**dadurch gekennzeichnet,** daß die Basisabdichtung entlang der äußeren Begrenzungslinie unter Bildung einer geschlossenen Wanne hochgezogen wird.

3. Verfahren nach Anspruch 1,
**dadurch gekennzeichnet,** daß die Außenwand des betonartig erstehenden Deponiekörpers auf einen Neigungswinkel über 8 : 1, vorzugsweise auf 10 : 1 steil eingestellt wird.

4. Verfahren nach einem der Ansprüche 1 bis 3,
**dadurch gekennzeichnet,** daß die Hinterfüllung zwischen äußerer Begrenzungswand des Deponiekörpers und der Steinbruchwand sukzessive mit dem Hochziehen des Deponiekörpers erfolgt.

5. Verfahren nach einem der Ansprüche 1 bis 4,
**dadurch gekennzeichnet,** daß die Hinterfüllung geschichtet erfolgt, indem auf der Steinbruchwand eine Hangdränage aus geeigneter durchlässiger Schotterschicht und an dem Deponiekörper eine mineralische Dichtung hochgezogen wird.

6. Verfahren nach Anspruch 5,
**dadurch gekennzeichnet,** daß die Hangdränage auf eine mittlere Stärke von 1 m gebracht wird.

7. Verfahren nach Anspruch 6,
**dadurch gekennzeichnet,** daß als Schotter für die Hangdränage eine Körnung von 16 bis 32 mm verwendet wird.

8. Verfahren nach Anspruch 5 oder 6,
**dadurch gekennzeichnet,** daß die Hangdränage im Bereich der Steinbruchsohle in einem Versickerungsgraben münden gelassen wird.

9. Verfahren nach Anspruch 5,
**dadurch gekennzeichnet,** daß für die eine Stärke von ca. 3 m aufweisende mineralische Dichtschicht solche inerten Materialien eingesetzt werden, die nach üblichem Verdichten eine Durchlässigkeit von K_{f} gleich oder kleiner als 1 x 10⁻¹⁰ m/s aufweisen.

10. Verfahren nach Anspruch 1,
**dadurch gekennzeichnet,** daß nach Abschluß der Deponiearbeiten eine mehrlagige Oberflächenabdichtung gebildet wird.

11. Verfahren nach Anspruch 1,
**dadurch gekennzeichnet,** daß durch dachprofilartige Ausgestaltung der Basis der Deponie und durch Anordnungen von Pumpschächten über den tiefsten Punkten auf der Basisabdichtung Abpumpstellen für sich ansammelndes Sickerwasser gebildet werden.

## Claims

1. A method for the harmless dumping of solidified inorganic residues and wastes, particularly from flue gas precipitation plants or metallurgical processes, in abandoned quarries, by mixing the residues or mixtures of residues with an adequate quantity of hydraulic bonding agents, such as Portland cement, blast furnace cement, alinite cement, and by adding the necessary quantity of mixing water during renewed mixing, so that a solidifiable concrete mortar mixture having a strength equal to or greater than 2 N/mm² (after 7 days) and a permeability value K_{f} equal to or lower than 10⁻⁹m/s , characterized in that on a base seal, which is applied to the quarry floor, a concrete mortar mixture is drawn up in layers to form a monolithic body of waste having steep flank walls, the remaining free space between the body of waste and the quarry wall is filled with inert materials, and on completion of the dumping work, the body of waste is in conventional manner furnished with a suitable surface seal.

2. A method according to claim 1, characterized in that the base seal is drawn up along the outer boundary line to form a closed shell.

3. A method according to claim 1, characterized in that the outer wall of the body of waste produced concrete-fashion is adjusted to a steep angle of inclination above 8 : 1, preferably 10 : 1.

4. A method according to one of claims 1 to 3, characterized in that the backfilling between the outer boundary wall of the body of waste and the quarry wall is performed successively with the drawing-up of the body of waste.

5. A method according to one of claims 1 to 4, characterized in that the backfilling is produced in layers, a slope drainage of a suitable permeable ballast layer being drawn up on the quarry wall and a mineral seal on the body of waste.

6. A method according to claim 5, characterized in that the slope drainage is brought to a mean thickness of 1 m.

7. A method according to claim 6, characterized in that a grain size of 16 to 32 mm is used as the ballast for the slope drainage.

8. A method according to claims 5 or 6, characterized in that the slope drainage is caused to discharge into a seepage ditch in the zone of the quarry floor.

9. A method according to claim 5, characterized in that for the mineral sealing layer having an approximate thickness of 3 m such inert materials are used as have after conventional densification a permeability K_{f} equal to or lower than 1 x 10⁻¹⁰m/s.

10. A method according to claim 1, characterized in that on completion of the dumping work, a multilayer surface seal is formed.

11. A method according to claim 1, characterized in that pumping-off places for accumulating seepage water are formed on the base seal by a roof-outline-like shaping of the base of the body of waste and by the provision of pump shafts over the deepest points.

## Revendications

1. Procédé pour le dépôt sans nuisance de résidus et déchets inorganiques solidifiés, en particulier ceux qui proviennent d'installations de dépoussiérage ou de procédés métallurgiques, dans des carrières abandonnées par mélange des déchets ou de mélanges de déchets avec une quantité suffisante de liants hydrauliques tels que le ciment Portland, le ciment de haut fourneau, le ciment Alinit et par ajout de la quantité requise d'eau à gâcher au cours d'un mélange intime répété de façon à obtenir un mélange de mortier de béton avec une résistance mécanique égale ou supérieure à 2 N/mm² (après 7 jours) et une valeur de perméabilité K_{f} égale ou inférieure à 10⁻⁹ m/s,
**caractérisé en ce que**, un corps de décharge monolithique avec des parois de flancs raides est élevé par couches consécutives du mélange de mortier de béton sur une étanchéité de la base, qui est épandu sur la sole de la carrière, et que l'espace restant libre entre le dépôt de déchets et la paroi de la carrière est rempli avec des matériaux inertes, et que l'on munit de manière usuelle après la fin du travail le corps de décharge d'une étanchéité de surface appropriée.

2. Procédé selon la revendication 1, **caractérisé en ce que**, l'étanchéité de la base est élevée suivant la ligne de limite extérieure pour former une cuve fermée.

3. Procédé selon la revendication 1, **caractérisé en ce que**, la paroi extérieure du corps de décharge en béton en cours de construction est réglée à une pente d'angle supérieur à 8 : 1, de préférence a 10 : 1.

4. Procédé selon l'une des revendications 1 à 3, **caractérisé en ce que**, l'on réalise le remplissage entre la paroi limite extérieure du corps de décharge et la paroi de la carrière de manière successive avec la construction du corps de décharge.

5. Procédé selon l'une des revendications 1 à 4, **caractérisé en ce que**, l'on réalise le remplissage par couches, en élevant un drainage de pente composé d'une couche perméable approprié de ballast contre la paroi de la carrière et en élevant une étanchéité minérale contre le corps de décharge.

6. Procédé selon la revendication 5, **caractérisé en ce que**, le drainage de pente est réalisé avec une épaisseur moyenne de 1 m.

7. Procédé selon la revendication 6, **caractérisé en ce que**, l'on utilise comme ballast pour le drainage suspendu une granulométrie de 16 à 32 mm.

8. Procédé selon la revendication 5 ou 6, **caractérisé en ce que**, l'on fait déboucher le drainage de pente, dans la zone de la sole de la carrière, dans une fosse d'infiltration.

9. Procédé selon la revendication 5, **caractérisé en ce que,** l'on utilise pour la couche d'étanchéité minérale présentant une épaisseur de 3 m environ des matériaux inertes qui présentent après compression usuelle une perméabilité K_{f} égale ou inférieure à 1 x 10⁻¹⁰ m/s.

10. Procédé selon la revendication 1, **caractérisé en ce que,** l'on forme après la fin du travail de dépôt des déchets, une étanchéité de surface multicouche.

11. Procédé selon la revendication 1, **caractérisé en ce que**, l'on forme par réalisation de la base du dépôt de déchets avec un profil en toit et par placements de puits d'épuisement sur les points les plus profonds de l'étanchéité de la base, des emplacements de pompage pour l'eau d'infiltration qui s'accumule.
